# EUROPEAN PATENT SPECIFICATION

(11) **EP 3 485 662 B1**
(45) Date of publication and mention of the grant of the patent: **13.10.2021**
(21) Application number: 16757783.2
(22) Date of filing: 15.08.2016
(51) Int. Cl.: H04W 4/90, H04M 1/725, H04M 1/72421

(54) **LIVE PAGING SYSTEM AND METHODS OF USING THE SAME**
LIVE-FUNKRUFSYSTEM UND VERFAHREN ZUR VERWENDUNG DAVON
SYSTÈME DE RADIOMESSAGERIE EN DIRECT ET PROCÉDÉS D'UTILISATION DE CE DERNIER

(43) Date of publication of application: 22.05.2019
(73) Proprietor: Siemens Industry, Inc., Alpharetta, GA 30005-4437 (US)
(72) Inventor: EL-MANKABADY, Emad, Monroe, New Jersey 08831 (US); IASSO, Daniel S., Towaco, New Jersey 07082 (US); LIMLAW, Robert, Boonton, New Jersey 07005 (US); PERLAK, Lester K., Westfield, New Jersey 07090 (US); BAKER III, George E., 6300 Zug (CH)
(74) Representative: Isarpatent
(86) International application number: PCT/US2016/047008
(87) International publication number: WO 2018/034643

(56) References cited:
- US-A1- 2014 375 800
- US-A1- 2014 375 800

## Description

### TECHNICAL FIELD

The present invention relates generally to the field of emergency notification systems, and more particularly, to live paging from mobile devices of the emergency notification systems.

### BACKGROUND

Typical fire safety systems include a number of safety field devices. For example, devices in a fire safety system may include fire and smoke detectors, pull stations, notification appliances or the like, positioned throughout an infrastructure for detecting an emergency event and notifying individuals of the emergency event. Notification appliances may include strobes, beacons, horns, speakers, displays or other notification devices or combination thereof for annunciating an alarm or emergency event. Safety devices are generally monitored and managed via a controller such as, for example, a fire alarm control panel (FACP). The FACP may receive from the safety devices information related to device status, location, and other information related to the respective devices. An operator/administrator may also be positioned at the FACP in order to receive and broadcast any event occurrences. For example, upon the occurrence of an emergency event (e.g., a fire), the operator/administrator is typically notified by one or more alarms/alerts from the safety devices via the FACP. Thereafter, the operator may use a microphone operatively connected to the FACP to announce/broadcast an audio message or live page pertaining to the emergency event to those who may be affected. In some instances, however, the operator may not have immediate access to the FACP's microphone, e.g., during a walk-through of an area remote to the FACP, and is therefore, unable to immediately broadcast the emergency event. This may cause an unwanted delay between the event occurrences and notifying those who will be affected, since the operator must return to the FACP to use the FACP's microphone to make the announcement. Therefore, there remains a need to provide operators with the ability to broadcast an audio message or live page pertaining to the occurrence of emergency events in instances where they are not physically at the FACP's microphone, and/or if the FACP microphone is not readily available.

In terms of fire control systems, US 2014/375 800 A1 discloses a system in which a broadcast message logic receives a broadcast message such as a pre-recorded broadcast message. Furthermore, a monitoring center can identify an event condition based on a received surveillance data block from a surveillance device. The surveillance device contains a motion or position sensor. Several surveillance devices may be viewed on a user interface executing on a user device. In accordance with an emergency event, a user can broadcast a message to a selected surveillance device wherein this is done in response to sending a notification to a user device.

### SUMMARY

The object of the present invention is to provide an improved system and method that may be employed in a live paging system to enable live paging from mobile devices via a control panel to notification devices in the live paging system. This object is solved by a system of claim 1 and a method according to claim 7 and further advantageous amebodiments and improvements of the present invention are listed in the dependent claims.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
*Fig. 1* illustrates an exemplary embodiment of a live paging system in accordance with the disclosure provided herein;
*Fig. 2A* illustrates an exemplary embodiment of a control panel that may be utilized in the system shown in *Fig. 1*, and in accordance with the disclosure provided herein;
*Fig. 2B* illustrates an exemplary embodiment of a screen capture of a user interface generated and managed by a control application of the control panel of *Fig. 2A*;
*Fig*. *3* illustrates an exemplary embodiment of a safety device for detecting an emergency event condition in accordance with the disclosure provided herein;
*Fig*. *4* illustrates an exemplary embodiment of a mobile device that may be utilized in the system shown in *Fig. 1*, and in accordance with the disclosure provided herein;

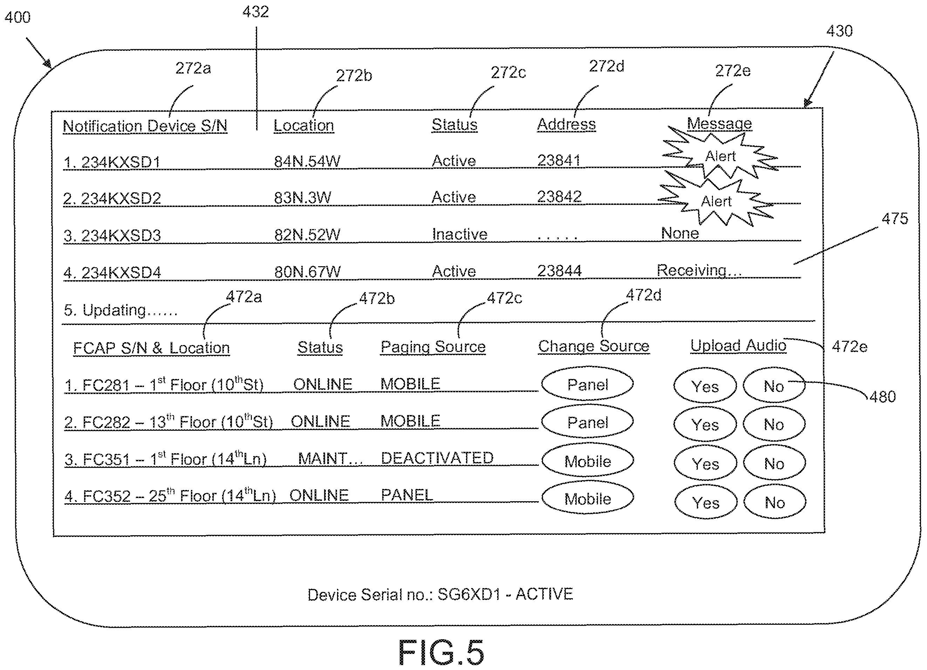

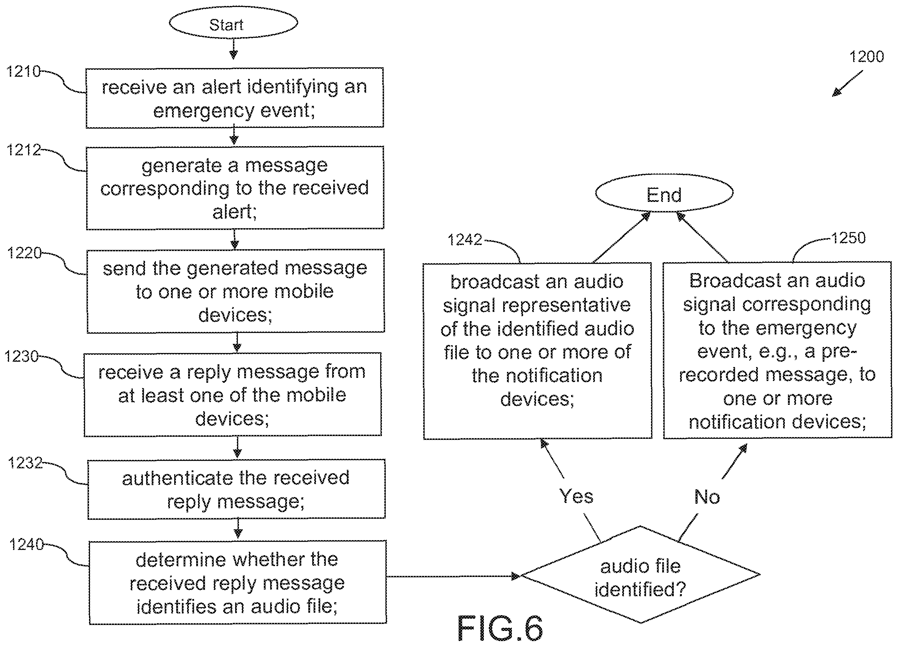

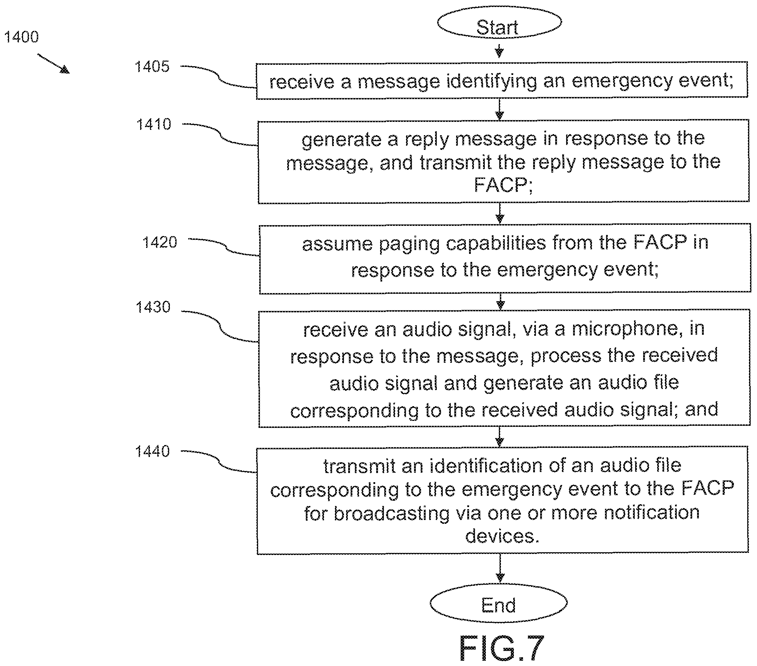

*Fig. 5* illustrates an exemplary embodiment of a screen capture of a user interface generated and managed by a control application of the mobile device of *Fig*. *4*, and in accordance with the disclosure provided herein;
*Fig*. *6* illustrates an exemplary flowchart of a process performed by the fire control panel of *Fig*. *2* in accordance with the disclosure provided herein; and
*Fig*. *7* illustrates an exemplary flowchart of a process performed by the mobile device of *Fig*. *4* in accordance with the disclosure provided herein.

### DETAILED DESCRIPTION

The components and materials described hereinafter as making up the various embodiments are intended to be illustrative and not restrictive. Many suitable components and materials that would perform the same or a similar function as the materials described herein are intended to be embraced within the scope of embodiments of the present invention.

In general, the computing systems and devices described herein may be assembled by a number of computing components and circuitry such as, for example, one or more processors (e.g., Intel®, AMD®, Samsung®) in communication with memory or other storage medium. The memory may be Random Access Memory (RAM), flashable or non-flashable Read Only Memory (ROM), hard disk drives, flash drives, or any other types of memory known to persons of ordinary skill in the art and having storing capabilities. The computing systems and devices may also utilize cloud computing technologies, via the internet, to facilitate several functions, e.g., storage capabilities, executing program instructions, etc., as described in further detail below. The computing systems and devices may further include one or more communication components such as, for example, one or more network interface cards (NIC) or circuitry having analogous functionality, one or more one way or multi-directional ports (e.g., bi-directional auxiliary port, universal serial bus (USB) port, etc.), in addition to other hardware and software necessary to implement wired communication with other devices. The communication components may further include wireless transmitters, a receiver (or an integrated transceiver) that may be coupled or connected to broadcasting hardware of the sorts to implement wireless communication within the system, for example, an infrared transceiver, Bluetooth transceiver, or any other wireless communication know to persons of ordinary skill in the art and useful for facilitating the transfer of information. Additionally, a power supply/pack (e.g., hard wired, battery, etc.) may be included in any of the computing devices described herein. These power supplies may also include some form of redundancy or a backup power means known to persons of ordinary skill and for maintaining the functionality of the computing devices and/or components described herein.

Referring now to the drawings wherein the showings are for purposes of illustrating embodiments of the subject matter herein only and not for limiting the same, *Fig*. *1* illustrates an embodiment of a live paging system **100,** such as a fire alarm or safety system. The system **100** may include one or more control panels **200** operably connected to one or more safety field devices **300** (also referred to herein as an alarm device or a notification safety device), one or more mobile devices **400,** and one or more data housing platforms (DHP) **500,** e.g., cloud computing services.

In one exemplary embodiment, as illustrated in *Fig*. 1, the control panel **200,** safety device **300,** and mobile device **400** may be operably connected to each other within a defined area **105,** e.g., a building or campus, via one or more electronically supervised audio paths or communications links **150, 152.** The DHP **500** may also be operably connected to the control panel **200** and mobile device **400** via the electronically supervised audio paths or communications links, or may facilitate communication between multiple devices within the system **100,** e.g., multiple control panels **200** via the communications link. The communications links may be, e.g., a wired communications link **152,** wireless communications link 150, or any other communications link known to persons having ordinary skill in the art and configurable to allow for communication and/or interfacing between the devices and/or components of the system **100.** Examples of such communication links may include Local Area Networks (LAN), Wide Area Networks (WAN), and Global Area Networks (GAN) having wired or wireless branches. Additionally, network devices/components and/or nodes (e.g., cabling, routers, switches, gateway, etc.) may also be included in the system **100** for facilitating the transfer of information within the system **100,** and between at least the control panel **200,** the one or more safety devices **300,** the mobile device **400,** or any devices that may be external to the system **100.**

With reference to *Fig*. *2**,* the control panel **200** may be, e.g., a fire alarm control panel or fire and voice control panel (FACP) **200,** and may include any combination of the components and/or circuitry described above for facilitating the transfer of information within the system **100.** In the embodiment of *Fig*. *2A*, the FACP **200** includes, at least, a processor **210** operably connected to a memory **220** for executing various instructions and/or commands of a control application ("CAP") **270,** which may be stored in the memory **220.** The FACP **200** may further include a user interface **230,** storage component **240** (e.g., hard disk drive, solid-state drive etc.), and network interface device **250.** The network interface device **250** may be any of the communication components (e.g., NIC, wireless transceivers etc.) described herein for facilitating the transfer of information between the FACP **200** and other devices within the system **100,** via, e.g., the communication links described herein. The user interface **230** may comprise a display with a separate or integrated keyboard and/or stylus that enables the processor **210** to provide outputs to and receive inputs from a user when under the control of the CAP **270.** In a further exemplary embodiment, the user interface **230** may comprise a touch screen display that may be controlled and managed by the CAP **270.** The touch screen display may have dual functionality for providing both an input means for receiving commands upon depressing the touch screen in any capacity, and an output or displaying means for displaying the results of the received/executed commands of the CAP **270.**

The FACP **200** may further include one or more microphones **264** operably connected thereto via an audio input **260,** and one or more notification or broadcasting devices, e.g., speakers **268,** operably connected thereto via an audio output **262.** In one embodiment, the audio input **260** and output **262** may be a single component, i.e., a single port having input/output (I/O) capabilities. In one embodiment, the microphones **264** may be connected to the audio input **260** via a microphone interface circuit 266 operable to receive and/or convert audio signals from the microphone **264** or similar device configured for transmitting audio signals to the FACP **200.** The speakers **268** may also be connected to the audio output **262** via an amplifier and/or speaker interface circuit (A/S) **269** for facilitating the broadcasting of any audio from the FACP **200,** or other devices configured for broadcasting audio, e.g., the mobile device **400.**

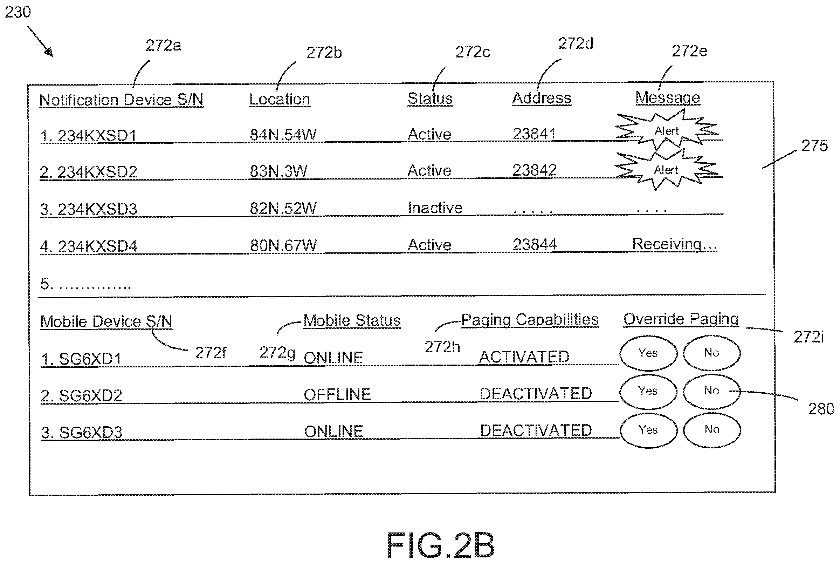

In a further embodiment, the FACP **200** may include a proxy or gateway application (GA) **255** stored in the memory **220** and operable to establish a connection between the FACP **200** and other devices, e.g., the mobile device **400** and DHP **500** via the network interface device **250.** The GA **255** may be its own application executed by the processor **210,** or in a yet further embodiment, or series of instructions part of the CAP **270.** In order to establish a connection, the GA **255** be operably configured to authenticate user credentials and/or verify system device information via a database or listing **245.** In one embodiment, the listing **245** may be included in the GA **255,** or in a further embodiment, requested or retrieved from in the FACP **200,** e.g., via the storage **240** or memory **220.** The listing **245** may include, for example, a list of mobile devices **400** authorized or registered with the FACP **200** for communicating with the FACP **200** via the gateway **255** for live page broadcasting to notification devices **268** and safety field devices **300** having an audio annunciator (such as a speaker) that are under the control of the FACP **200.** Additionally, each entry of the listing **245** may include information corresponding to the fields **272f-272i** of the user interface **230** (as depicted in Fig. 2B, for example) managed by the CAP **270** of the FACP **200.**

During the authentication operation, for example, the processor **210** of the FACP **200,** when under the control of the gateway **255,** may receive an authentication request from a mobile device **400** over the communication link **150** for overriding paging of the FACP **200** by the requesting mobile device **400.** The gateway **255** (alone or in cooperation with the CAP **270**) may access the listing **245** to verify that the requesting mobile device is authorized and/or registered before providing an acknowledgment message to the requesting mobile device **400** indicating that it has no paging capabilities, has paging capabilities that are activated by the FACP **200** for override paging, or has paging capabilities that are currently deactivated by the FACP **200** for override paging.

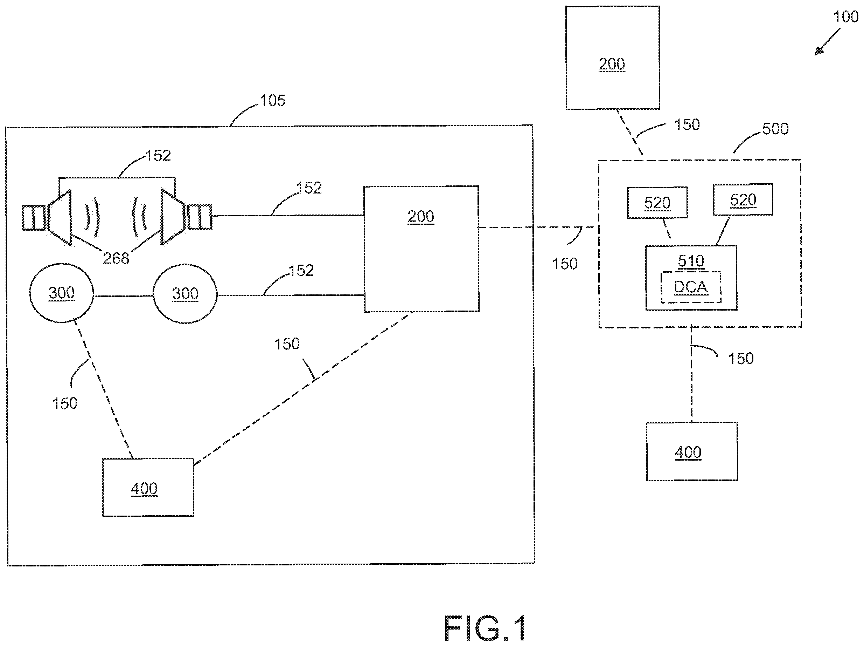

With continued reference to the figures, the DHP **500** (*Fig. 1*) may include a data controller **510** operably connected to a data storage **520.** The data storage **520** may be operably configured for storing any system data, including, e.g., data related to the events that may have occurred within the system **100.** That is, the data storage may effectively provide the space necessary to archive any data related to the events, including the log files and corresponding audio files. The data controller **510** may include any combination of the components and/or circuitry described above for facilitating the transfer of information between, e.g., the data controller **510,** the data storage **520,** the FACP **200,** or other devices within the system **100.** For example, in one exemplary embodiment, the data controller **510** may include a processor operably connected to a memory for executing one or more instructions or commands of a control application (DCA) of the data controller **510.** The DCA may be stored in the memory of the data controller **510,** or other device operably connected thereto. In yet a further exemplary embodiment, the GA **255** may be a series of instruction of the DCA for authenticating user credentials and/or verify system device information via a database or listing **245.** In this embodiment, access to the FACP **200** may be granted following authentication via the DCA, which may include the listing **245** stored in e.g., the data storage **520.**

With continued reference to the figures, and now *Fig. 2B*, an exemplary screen capture 275 of the user interface **230** generated via the CAP **270** in accordance with disclosed embodiments is provided. The user interface **230** may be a graphical user interface (GUI) generated by the CAP **270.** The GUI may include one or more user selectable icons, which may be graphical symbols and/or include text (e.g., hyperlinks), corresponding to executable commands or instructions to be processed by the processor **210.** The various commands may be activated and processed by the CAP **270** upon selection of the icons via the user interface **230.** The user interface **230** may further include one or more fields **(272)** for displaying data from a database or other listing, e.g., having identification information corresponding to one or more devices within the system **100.**

In the embodiment of *Fig*. *2B*, e.g., the fields **272** of the user interface **230** may include a notification or safety field device serial number field **272a,** a location field **272b** for identifying the geographic coordinates for each device, a status field **272c** for providing the status, e.g., active or inactive, for each device, an address field **272d** that may identify the location of the device within the system **100,** a message field **272e** that may provide information related to the occurrence of an emergency event; a mobile device serial number field **272f,** a second status field **272g** indicating whether or not a particular mobile device or group of devices are online or offline, a paging field **272h** corresponding to whether or not a respective mobile device's paging capabilities has been activated, and an override field **272i** for providing an operator with the option to override the paging capabilities of the microphones **260** associated with the FACP **200.** The override field **272i** may further include one or more selectable icons **280,** e.g., "yes" and "no" icons. The selectable icons 280 may be configured to trigger executable instructions for the processor **210** of the FACP **200,** under the control of the CAP **270** (e.g., upon selection of the icon **280**) to perform one or more operations corresponding to the fields **272.** In operation, e.g., , upon selection of the "yes" icon **280,** under the override field **272i,** the paging capabilities of any microphone(s) for the mobile devices **400** may be overridden, i.e., deactivated, and the paging capabilities may thereby be relinquished from the mobile device **400** to the FACP **200.**

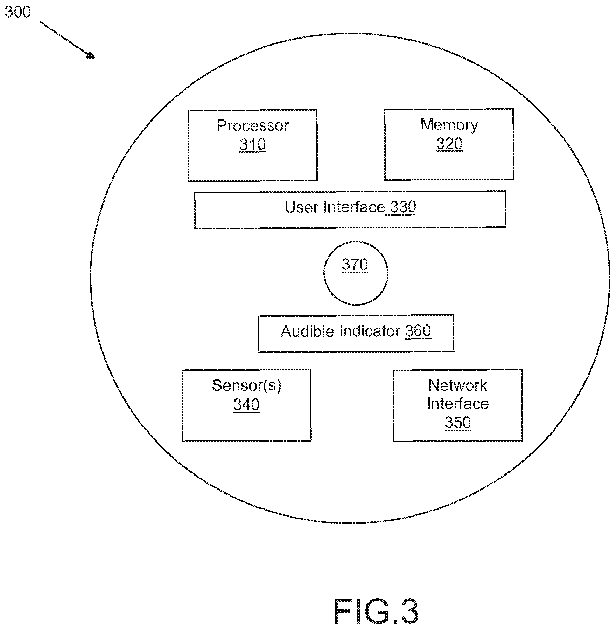

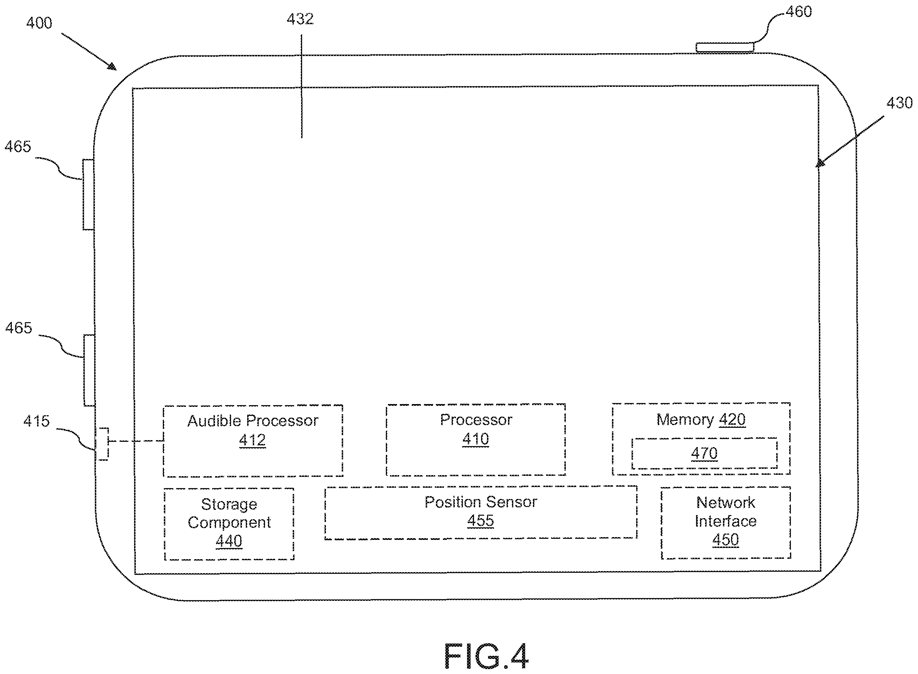

With reference to *Fig. 3*, an embodiment of the safety field device **300** that may be utilized in the system of *Fig*. *1* is shown. Similar to the control panel **200,** the safety field device **300** may include any combination of the above circuitry and components to facilitate communication within the system **100,** and for its operational purposes. The safety field device **300** may be configured to interface with the control panel **200** from which control and/or monitoring of the safety field devices **300** may be performed. Additionally, as previously disclosed, intervening devices and or components (e.g., routers, switches etc.) may be used to facilitate the transmission of information between the safety field device **300**, control panel **200**, and the mobile device **400.** The safety field device **300** may be any number of devices, such as detectors (e.g., smoke), sensors, controllers (e.g., I/O devices, relays), pull stations, speakers etc., to detect, alert and control safety related concerns. As shown in *Fig*. *3*, the safety field device **300** may include, at least, one or more processors **310**, memory components **320**, a user interface **330**, sensors 340, and network interface components **350.** The user interface **330** may be similar to the user interface **230** of the control panel **200** in that it may provide a means for transmitting commands to and from the devices within the system **100**, for example, commands to and from the control panel 200 and/or the mobile device **400.** Additionally, one or more network interface components **350** for facilitating the transfer of information may be included in the safety field device **300.** The network interface components **350**, or means for interfacing, may include any number of components operable for wired communication, e.g., NIC, USB, two wire fire control loop circuit, etc., or wireless communication (e.g., wireless transceiver, Infrared, Bluetooth, Wi-Fi, etc.), within the system **100**, and between its devices, such as, the safety field device **300**, the control panel **200**, and/or the mobile device **400.**

With continued reference to the figures, and now *Fig*. *4*, an embodiment of the mobile device **400** that may be utilized in the system of *Fig*. *1* is shown. The mobile device **400** may be a hand held device, for example, a personal digital assistant (PDA), smart phone, tablet, notebook, or any device known to persons of ordinary skill in the art and having the hardware and software capability and configurability to provide a means for announcing and/or broadcasting an occurrence of an emergency event to notification devices **268** within the system **100** in accordance with disclosed embodiments.

The mobile device **400** may be configured to interface with the devices within the system **100**, e.g., the control panel **200**, safety field devices **300** and **268**, either directly or via the DHP **500** (e.g., across the Internet). Similar to the control panel **200** and safety field device **300**, the mobile device **400** may include any combination of the above circuitry and components to facilitate communication and the transmission of information within the system **100**, and for its operational purposes. Additionally, the mobile device **400** may also include one or more operating systems such as, for example, Palm OS®, Microsoft® OS, Blackberry OS®), Symbian OS®), Mac OS®), I OS®, Android OS®, Linux OS® or any operating system known to persons of ordinary skill in the art and having the capabilities to execute programs for interfacing with the control panel **200**, and other devices/nodes communicating within the system **100.**

In the embodiment of *Fig*. 4, the mobile device **400** includes, at least, a processor **410** in signal communication with a memory **420**, a user interface **430,** a storage component **440**, a network interface component **450**, and an audio processor **412** operably connected to a microphone **415.** The processor **410** may be operable to execute a plurality of instructions/commands from an embodiment of mobile alarm control application (MAC) **470** for facilitating the paging operation from the mobile device **400**, and the transmission of information between the mobile device **400** and the FACP **200** directly (e.g., via a Bluetooth wireless protocol) and/or via the DHP **500** (e.g., via a standard TC/IP network protocol). The audio processor **412** may be configured to process audible signals from the microphone **415.** In one embodiment, the audio processor **412** may, e.g., convert the signals into a file format compatible for use by FACP **200** or other devices within the system **100** or operably connected thereto. Additionally, the audio processor **412** may be configured to compress and/or split the audio files into sub-files, which may provide for faster or improved data transfer rates.

The microphone **415** may be integrated into the mobile device **400,** or an external device operably coupled to the mobile device **400** via a wireless or wired interface, e.g., via the mobile port **465.** It should also be appreciated that a wireless connection may also be established between the mobile devices via wireless protocols and/or transmitters discussed herein (e.g., Bluetooth, Infrared Sensor or the like). The audio processor **412** may capture and/or record via the microphone **415** one or more audio messages from the operator of the mobile device **400** and/or the areas surrounding of the microphone **415.** In one embodiment, the microphone **415** may be activated to capture audio once the MAC **470** is launched on the mobile device **400.** In another embodiment, the microphone may be activated upon selecting an icon representative of the microphone **415** via the MAC **470,** the icon having corresponding executable instruction for activating the microphone **415.** Additionally, the microphone **415** may be activated manually via, e.g., any application or selectable controls specific to the mobile device **400**, or by any means known to persons having ordinary skill in the art.

Similar to the user interface **230**, the user interface **430** may be any general interface for receiving user input and generating a displayable output on a display **432.** In one embodiment, the user input may be the display **432**, e.g., a touch screen display having dual functionality for providing an input means for receiving commands via at least a portion of the display **432,** and a displaying means for displaying any results corresponding to any received/executed commands. In this embodiment, e.g., the touch screen display **432** may display one or more selectable icons generated by the MAC **470.** Upon depressing at least a portion of the display **432** corresponding to the selectable icon of the MAC **270,** the processor receives his selection or command to execute instructions corresponding to the selected icon, and subsequently display any results via at least a portion of the touch screen display **432.** Other input means may include a keyboard, mouse, stylus or the like, connected to the mobile device **400** via the network interface component **450** (wired or wireless), or any means known to persons of ordinary skill in the art and capable of interfacing an input device/component with the mobile device **400.**

The network interface component **450** may be similar to the network interface components of the safety field device **300** in that it is operable to facilitate communication within the system **100.** For example, the network interface component **450** may be a wireless transceiver, or any components operable for wired or wireless communication within the system **100**, and between its devices. The storage component **440** may be integrated into the mobile device (e.g., flash memory) or an external storage connected via the network interface component **450.** Examples of external storages may be an external hard disc drive, cloud storage space, or other types of external storage devices known to persons of ordinary skill in the art and capable of being access in real-time by the mobile device **400.**

The mobile device **400** may further include one or more mobile sensors **460**, and one or more mobile ports **465** (e.g., analog, digital, audio, auxiliary ports etc.) having input/output capabilities. The mobile ports **465** may also have dual functionality, for sending and receiving information to any of the devices within the system **100.** The mobile sensors **460** may also be configured to detect the status of the safety field device **300**, and subsequently execute instructions for launching the MAC **470.** For example, upon the occurrence of a building fire event, in addition to alerting the FACP **200** of the event, the safety field device **300** may simultaneously or subsequently alert the mobile device **400** of the event by broadcasting a signal sensible by the mobile sensor **460**, which identifies the occurring event. The mobile sensor **460** may receive one or more signals from the safety field device **300** indicative of the event occurrence, and may subsequently cause the processor **410** to execute instructions or commands to launch the MAC **470.** The mobile device **400** may further include a means for determining the position, or position sensor **455**, such as a GPS device (e.g., a GPS receiver or Assisted GPS module), a navigation module or the like, or any transceiver or module known to persons of ordinary skill in the art for determining location coordinates.

In one embodiment, the MAC **470** may include a series of instructions for communicating with the position sensor **455** to determine the current position (e.g., longitudinal or latitudinal coordinates) of the mobile device **400,** and for providing the coordinates to the FACP **200.** The current position may subsequently be used to assist in executing emergency protocols, e.g., alerting and/or evacuating individuals and/or devices in and around the areas corresponding to the mobile device **400.** Additionally, emergency personnel, e.g., firefighters, police, etc., may be notified and provided the position of the mobile device **400** to assist with the emergency protocols.

With continued reference to the figures, and now *Fig*. *5*, an illustration of a screen capture of an interactive interface (i.e., screen **475**) generated and displayed by the MAC **470** is shown. In one embodiment, upon launching the MAC **470**, one or more input fields may be provided for receiving characters and/or authentication information corresponding to the operator of the mobile device **400**, or any authorized user. In one embodiment, upon entering the authentication information, the processor **210** under the control of the MAC **470** send a first message including the authentication information and an identifier of the mobile device **400** (e.g., mobile device serial number or mobile subscription identification number) to the FACP **200** hosting the GA **255**, or in a further embodiment, via one or more controllers **510** of the DHP **500** hosting the DCA for verification that the mobile device **400** is registered with the FACP **200** for live paging override to one or more notification devices **268** in the system **100.** The processor of the FACP **200**, under the control of the GA **255**, may receive the first message from the mobile device **400**, parse the first message to determine the identifier of the mobile device **400** and determine (alone of in cooperation with CAP **270**) if mobile device **400** identifier is among the list of mobile devices **400** registered with the FACP **200** as shown in the list reflected by field 272f of the user interface **230** of the FACP **200** in *Fig*. *2B**.*

The MAC **470** may also generate one or more selectable icons and/or links, which upon selection of the icons, various commands may be executed. For example, selecting an icon representative of the microphone **415** may execute instructions to activate the microphone **415** so that the operator may begin announcing the event occurrence. Additionally, selecting the same icon multiple times may deactivate the microphone **415.** Additional icons may also be provided for deactivating the microphone **415.** The MAC **470** may also generate icons for sending an audio file or begin streaming any live audio to the other devices in the system **100**, e.g., FACP **200**, or for uploading any recorded audio files, e.g., to the DHP **500** or any other devices configured to handle or manage audio files known to persons having ordinary skill in the art.

With continued reference to the *Fig, 5**,* the screen **475** may depict various fields that may be similar to the fields of the CAP **270.** For example, fields corresponding to the notification device **268** or safety field device with audio annunciator **300** may include the device serial number field **272a**, location field **272b**, status field **272c**, address field **272d,** and message field **272e.** Additional fields corresponding to other devices, e.g., the FACP **200** may also be provided by the MAC **470.** These fields may include, e.g., a FACP serial number and location field **472a** that may display the FACPs **200** within the system **100** and where they may be physically located, a status filed **472b** identifying whether or not the FACP **200** is online, offline, or undergoing any maintenance, a paging source field **472c** which may identify which device is in control of the paging capabilities as it corresponds to a particular FACP **200.** A change source field **472d** may also be provided, and may include one or more selectable icons corresponding to executable instructions operable to change the paging source upon selection of the icon. For example, if the paging source is provided at the FACP **200**, the operator of the mobile device, may select a "mobile" icon to switch control of the paging capabilities from the FACP **200** to the mobile device **400**, or vice versa. An upload audio field **472e** may also be provided, which may include one or more selectable icons **480** corresponding to executable instructions operable to facilitate the uploading of any recorded audio file, or to facilitate streaming a live broadcast from the mobile device **400.** It should also be appreciate that the live streaming and/or uploading functionality may be automated, i.e., executed without user intervention, once the microphone **415** is activated on the mobile device **400.** The information displayed in the fields **472** may be populated and/or queried from a database or listing (not shown) having device specific information for the devices registered within the system **100**, and that may be authorized to access the system **100.** In an embodiment where a list is provided, the MAC **470** may include a series of instructions for requesting or accessing the list the FACP **200** and/or the DHP **500.** In an embodiment where the information is provided via the database having device information, the MAC **470** may include a series of instruction for generating a query and requesting the device information from the database and based at least on the query.

With continued reference to the figures, and now *Fig*. 6, an exemplary flowchart is shown of a process **1200** performed by the FACP **200**, under the control of the CAP **270** for live paging in the system **100** in accordance with the disclosed embodiments. Upon the occurrence of an emergency event, e.g., smoke or fire present in a building, the safety field device **300** detects the event and may generate an alarm signal or alert indicative of the occurrence. The alert may include, among other things, the address and location of the safety field device **300**, the time when the safety field device **300** was activated, and the type of conditions being detected.

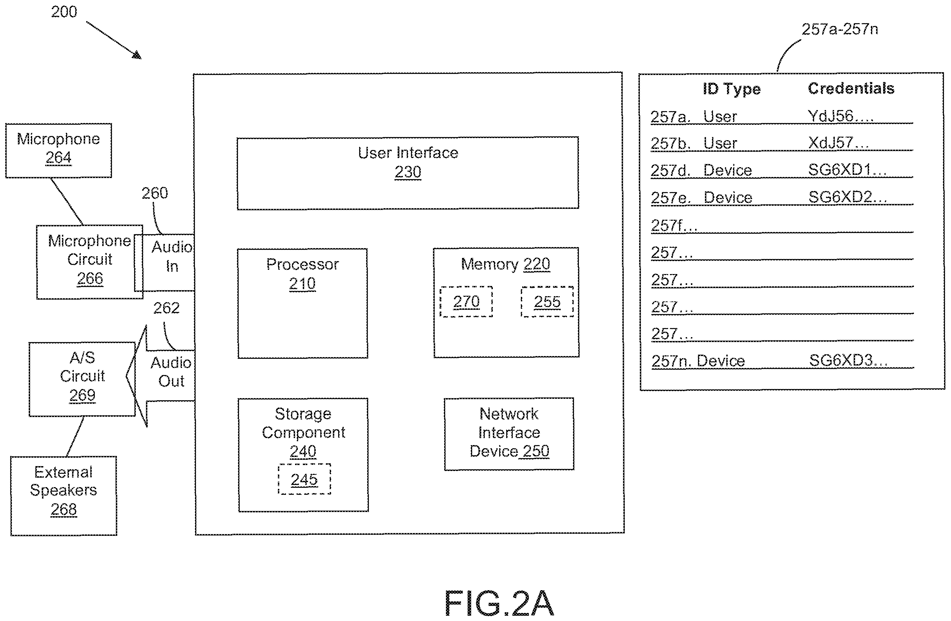

In the process **1200** depicted in *Fig*. *6*, the FACP **200** receives the detected alert from the safety field device **300** via a communication link **150** between the FACP **200** and the respective safety field device **300 (1210).** The FACP **200** generates a message identifying an emergency event corresponding to the received alert **(1212).** In one embodiment, the emergency event may be the alert (e.g., alarm signal received from the respective safety field device **300).** Alternatively, the emergency event may be pre-defined message assigned to any alert received from a respective safety field device **300** (e.g., fire detected in room corresponding to the location of safety field device **300** that transmitted the alert to the FACP **200**). Next, the FACP **200,** under the control of the CAP **270,** may send the emergency event message, via the gateway **255,** to one or more mobile devices **400** registered with the FACP **200** (**1220**). In one embodiment, the FACP **200** may send the emergency event message to at least the mobile device **400** that is registered with the FACP **200** for live paging and that is currently activated for overriding paging by the microphone **264** of the FACP **200.** The processor **210** of the FACP **200**, under the control of the CAP **270**, may determine which mobile devices **400** are registered by accessing a list **257a-257n** (*Fig. 2A*) of registered mobile devices **400** stored in memory **220.**

In one embodiment, the emergency event message may include general information related to the notification devices **268** within the system **100**, and preferably, the notification devices **268** that may receive and broadcast a live page audio signal (such as an audio file or a streaming audio signal). The general information related to the notification devices **268** may correspond to the fields **270** of the user interface **230** managed by the CAP **270** of the FACP **200.** Such general information of the notification devices **268** may be stored in memory **220** of the FACP **200** for access by the CAP **270.** In a further embodiment, the emergency event message may include mapping information for the location of such notification devices **268** within the system **100** so that an operator of a mobile device **400** that is registered and activated for paging within the system **100** may selectively identify which of the notification devices **268** should receive a live page audio signal from the operator via the respective mobile device **400** as further described herein.

In yet a further embodiment, the emergency event message or subsequent message generated by the FACP **200** under the control of the CAP **270** for transmission may include a series of executable instructions for controlling or enabling features of the mobile devices **400** associated with live paging to the notification devices **268** in the system **100** via the FACP **200.** The series of instructions in the emergency event message may be executed via the respective receiving mobile device's processor under the control of the MAC **470** of the mobile device. The controlled features may include, e.g., causing the safety field device **300** to activate their audible or visual indicators for alerting others about the conditions.

In one embodiment, the instructions for controlling or enabling features include a live paging activate command that causes the processor of the mobile device **400** to launch or start the MAC **470** and, to automatically generate the user interface **230** with the fields **272a-272e, 472a-472e** and selectable upload audio icons **480.** In this embodiment, the operator using the mobile device **400** as a responder need only announce the emergency event without launching or logging into the MAC **470** of the mobile device **400** so that the processor of the mobile device **400**, under the control of the MAC **470**, causes the MAC **470** to generate and transmit the responder's announcement of the emergency event to the FACP **200** for broadcast through pre-defined or selected notification devices **268.**

Continuing with the process **1200** as shown in *Fig*. 6, the FACP **200** receives, via the gateway **255**, an authentication request message (also referenced as a page request message or reply message) from a mobile device **400** over the communication link **150** for overriding paging via microphone **264** of the FACP **200 (1230).** In one embodiment, the page request message may include a live announcement audio file or segment corresponding to the emergency event transmitted by the FACP **200,** (e.g., the audio file or segment may be audio being streamed from the mobile device **400** in real-time). In a further embodiment, the page request message may include a data file that includes data corresponding to the emergency event, e.g., an audio data file from the mobile device **400.** In an alternative embodiment, the page request message may identify an audio file (e.g., a pre-recorded audio message) that is stored on the FACP **200** to signal to the FACP **200** to broadcast the identified audio file or pre-recorded audio message.

After receiving the authentication request or reply message, the FACP **200** under the control of the CAP **270** determines whether the received reply message is from one of the mobile devices registered with the FACP **200** (**1232**). In one implementation, the CAP **270** determines the reply message is from a registered mobile device **400** by locating the identifier of the mobile device **400** in the received message (where such identifier corresponds to a user credential for user authentication) and comparing the identifier of the mobile device **400** to the list **257a-257n** of mobile devices **400** registered with the FACP **200.** If it is determined the received reply message is not from one of the mobile devices registered with the FACP **200,** the CAP **270** may continue processing at step or act **1210** in order to detect and transmit further alerts corresponding to subsequent emergency events and to process any other received reply messages. By performing the action(s) identified in **1232** of the process **1200,** the FACP **200** advantageously inhibits users of unregistered mobile devices from overriding the microphone **264** of the FACP **200** to unauthorized broadcast audio messages. If it is determined that the received reply message is from one of the mobile devices registered with the FACP **200,** the FACP **200** under the control of the CAP **270** determines if the one mobile device **400** has been activated for paging via the FACP **200.**

In one implementation, the CAP **270** determines the one mobile device **400** has been activated for paging via the FACP **200** by accessing the paging capability corresponding to field **272h** of the one mobile device **400** as stored in memory **220** in relation to the identifier field **272f** for the one mobile device **400.** If it is determined that the one mobile device **400** has not been activated for paging, the CAP **270** may send a denial reply message back to the one mobile device **400** via the gateway **255** before continue processing at step or act **1210** in order to detect and transmit further alerts corresponding to subsequent emergency events and to process any other received page request messages. If it is determined that the one mobile device **400** has been activated for paging, the CAP **270** further parses the received request message for data associated with the requested page to determine whether the received reply message identifies an audio file, which may correspond to a pre-recorded audio message stored on the FACP 200 or an audio file or segment being streamed as recorded by the respective mobile device **400** that is included in the reply message (**1240**). If it is determined that the received request message identifies an audio file or segment, the FACP **200** under the control of the CAP **270** transmits (via the A/S interface circuit **269**) an audio signal corresponding to the audio file to one or more of the notification devices **268** in the system **100** (**1242**). Where the identified audio file corresponds to a pre-recorded audio message stored on the FACP 200, the FACP 200 retrieves the respective pre-recorded audio message as the audio file to be used in generating and transmitting the corresponding audio signal to the notification devices 268 in step **1242.**

The FACP **200** under the control of the CAP **270** may process (e.g., modify and reformat) the audio file or segment to generate the corresponding audio signal before broadcasting the audio signal via the one or more notification devices within the system **100.** In one embodiment, the FACP **200** under the control of the CAP **270** identifies the one or more notification devices **268** to be sent the audio signal corresponding to the received audio file or segment from the respective mobile device **400** by further parsing the received request message to locate any notification device identifiers (e.g., serial number corresponding to field **272a**) and transmitting the audio signal only to the notification devices **260** identified in the received request message. In another embodiment, the FACP **200** under the control of the CAP **270** identifies the one or more notification devices **268** to be sent the audio signal based on pre-defined rules, such as based on a pre-defined proximity of each notification device **268** to the location of the safety field device **300** that transmitted the alert corresponding to the emergency event to the FACP **200.**

If it is determined that the received request message does not identify an audio file or segment, the FACP **200** under the control of the CAP may transmit a pre-recorded or canned audio message corresponding to the emergency event (rather than an identified audio file from the mobile device) to the one or more notification devices **268** in response to receiving the request message from the one mobile device **400 (1250).** This pre-recorded or canned audio message may be repeatedly broadcasted by the FACP **200** until an audio file or segment is received in a subsequent page request message from the mobile device **400,** another audio file is identified in a subsequent page request message from the mobile device **400** that identifies a different pre-recorded audio message stored on the FACP **200,** and/or until the current emergency event has been downgraded or concluded. After transmitting an audio signal to the one or more notification devices **268** based on the received request message from the one mobile device **400,** the FACP **200** under the control of the CAP **270** may end processing or continue processing at step or act **1210** in order to detect and transmit further alerts corresponding to subsequent emergency events and to process any other received page request messages.

*Fig*. *7* illustrates an exemplary flowchart of a process **1400** performed by the mobile device **400,** under the control of the MAC **470,** for live paging in the system **100** in accordance with disclosed embodiments. In this process, the mobile device **400** receives a message identifying an emergency event occurrence from one or more devices within the system **100,** e.g., the FACP **200** (**1405**)**.** After receiving the message from the FACP **200,** the mobile device **400,** under the control of the MAC **470,** may generate a reply message in response to the message for transmit to the FACP **200** or other device, and may transmit the reply message to the FACP **200 (1410).** The reply message may include authentication information (e.g., user credentials such as a mobile device **400** ID) for verifying that the user or mobile device **400** is authorized to establish a connection with the FACP **200.** In an embodiment where user credentials are used for establishing a connection with the FACP **200,** the MAC **470** may generate a login page with input fields for receiving the credentials. Following the transmission of the credentials to the FACP **200,** the credentials may be verified by comparing the values of the credentials with a database or listing having user/device information, e.g., the list **257a-257n.** The authentication process may further include the use of a proxy or gateway application (e.g., GA **255,** DCA) to facilitate establishing the connection between the mobile device **400** and the devices within the system **100**, e.g., the FACP **200** or DHP **500.** Upon authenticating the user or mobile device **400**, a connection may be established between the mobile device **400** and the FACP **200** via the gateway **255.** Upon establishing the connection between the mobile device **400** and FACP **200,** the mobile device **400** may assume paging capabilities from the FACP **200 (1420).** In one exemplary embodiment, the paging capabilities may be assigned to the mobile device via the initial message from the FACP **200**, or in a further exemplary embodiment, upon authenticating the mobile device **400**. In yet a further exemplary embodiment, the mobile device **400**, under control of the MAC **470**, may also transmit a request for paging control with the reply message or any subsequent messages in response to the message from the FACP **200**.

It should be appreciated that the microphone **415** may be activated in combination with any of the above steps, e.g., step **1420**, or its own step prior to the operator's paging. Upon receiving paging control, the MAC **470** may generate a user interface, e.g., a GUI, displayed via the display **432**, which may provide the operator with information corresponding to the emergency event (e.g., type of event, location etc.), in addition to, e.g., one or more selectable icons corresponding to instructions for paging, e.g., stream audio, record audio, and upload audio. Upon selection of one of the icons, e.g., stream audio icon, the instructions of the MAC **470** corresponding to the icon may cause the processor **410** to execute instructions to begin receiving and/or processing one or more audio signals from, e.g., the microphone **415** (**1430**). For example, the operator may depress the stream audio icon via the touch screen display **432**, and begin paging via the microphone **415.** The series of instructions of the MAC **470** corresponding to the processing of the live page audio may include instructions for converting the file into a format compatible with the FACP **200** for streaming at least a portion of the audio data file in real-time. Additionally, instructions for compressing and/or splitting the audio file into multiple smaller sized files for transmitting the same to the FACP **200** in real-time may be included in the MAC **470.** After processing the audio signals from the microphone **415**, the mobile device **400** under the control of the MAC **470** may then transmit an identification of an audio file representative of the emergency event in real-time to the FACP **200** for broadcasting via one or more speakers **268** or annunciators **(1440).** In one embodiment, identified audio file may be representative of the audio signals from the microphone **415**, or in a further embodiment, the identified audio file may be representative of a pre-recorded audio message. It should also be appreciated that the identified audio file, e.g., the pre-recorded audio message, may be stored on the mobile device **400** and provided to the FACP **200** with the reply message or any other message from the mobile device to the FACP **200**, or in another embodiment, the identified audio file may be stored on another device within the system **100**, e.g., FACP **200**, data controller **510**, or data storage **520**, and made accessible to the FACP **200** for broadcasting via that device.

With continued reference to *Fig*. *7* and process **1400,** in an embodiment where the operator elects to record the audio versus streaming the page, upon selecting the record audio icon, an audio data file resulting from the operator's page may be generated, store locally, e.g., via the storage component **440**, and subsequently transmitted to the FACP **200** following the conclusion of the page. To determine whether the page has concluded, the MAC **470** may include instructions for detecting whether audio signals are being processed via the audible processor **412**, or being received via the microphone **415.** These audio signals may be indicative of whether the operator has concluded the page via the microphone **415**. If no audio is received via the microphone **415**, or processed via the audible processor **412**, a MAC **470** may determine that the page has concluded, and may cause the processor **410** to begin processing any present audio signals. Following the processing of the audio signals, if needed, the audio data file may be transmitted to the FACP **200** for broadcasting via the speakers **268** or other annunciators operably connected to the FACP **200.** Upon successful transmission of the audio data file from the mobile device to the FACP **200**, or upon the successful broadcasting of any audio via the annunciators, the connection between the mobile device **400** and the FACP **200** or DHP **500**, e.g., in an embodiment where the audio file is communicated to the FACP **200** via the DHP **500**, may be closed, and the mobile device **400** may relinquish paging capabilities back to the FACP **200,** which may also cause the microphone **415** to deactivate.

While specific embodiments have been described in detail, those with ordinary skill in the art will appreciate that various modifications and alternative to those details could be developed in light of the overall teachings of the disclosure. For example, elements described in association with different embodiments may be combined. Accordingly, the particular arrangements disclosed are meant to be illustrative only and should not be construed as limiting the scope of the claims. It should be noted that the terms "comprising", "including", and "having", are open-ended and does not exclude other elements or steps and the use of articles "a" or "an" does not exclude a plurality. Additionally, the steps of various methods disclosed herein are not required to be performed in the particular order recited, unless otherwise expressly stated.

## Claims

1. A live paging system including a plurality of fire control panels (200) and a mobile device (400), wherein one fire control panel (200) of the plurality of fire control panels has paging capabilities and comprises:
a processor (210) in signal communication with a memory (220) and configured to execute a plurality of instructions of a control panel application (270) stored in the memory (210) and in response to an emergency event;
wherein upon receiving (1210) an alert indicative of the emergency event, the processor (210), under the control of the control panel application (270), is configured to:
generate (1210) a message identifying the emergency event;
transmit (1220) the message to the mobile device (400);
receive (1230) a reply message, via the mobile device (400), in response to the message;
determine (1240) whether the reply message identifies an audio file corresponding to the emergency; and
broadcast (1242, 1250), via one or more notification devices (268, 300) operably connected to the fire control panel (200), an audio signal in response to determining whether the reply message identifies the audio file; wherein
the mobile device (400) includes a position sensor (400) for determining the current position of the mobile device (400) and the mobile device (400) providing the current position to the fire control panel (200); and wherein
the mobile device (400) further comprises a screen (475) depicting various fields, the fields including a serial number and location field (472a) displaying the fire control panels (200) within the system (100) and where they are physically located, a status field (472b) identifying whether or not the respective fire control panel (200) is online, offline, or undergoing any maintenance, a paging source field (472) identifying whether the mobile device (400) or the respective fire control panel (200) is in control of the paging capabilities, and a change source field (472d) including one or more selectable icons corresponding to executable instructions operable to change the paging source upon selection of the icon such that upon selection of the icon, control of the paging capabilities is switched from the respective fire control panel (200) to the mobile device (400) or vice versa,
wherein the mobile device is configured to send the reply message if the control of the paging capabilities is switched from the respective control panel to the mobile device upon selection of the one or more selectable icons.

2. The system of claim 1,
wherein the reply message includes the audio file; and
wherein the broadcasted audio signal is representative of the identified audio file.

3. The system of claim 2,
wherein the identified audio file is representative of audio received via a microphone (415) operably connected to the mobile device (400), or
wherein the identified audio file is representative of a pre-recorded audio message.

4. The system of claim 1,
wherein upon transmitting the message to the mobile device (400), the fire control panel receives one or more credentials included in the reply message, and wherein the processor, under the control of the control application, is further configured to:
determine whether the one or more credentials identifies the mobile device (400) as authorized to assume paging capabilities from the fire control panel prior to broadcasting the audio signals.

5. The system of claim 4, the fire control panel further comprising:
a storage device (240) that includes a listing (245) of users or devices authorized to assume paging capabilities from the fire control panel; and
wherein the processor, under the control of the control panel application, is further configured to verify the one or more credentials by comparing the one or more credentials with the listing.

6. The system of claim 1,
wherein the fire control panel, under the control of the control panel application, is further configured to: deactivate a microphone operably connected to the fire control panel upon relinquishing paging capabilities.

7. A method in a live paging system including a plurality of fire control panels (200) and a mobile device (400) for live paging in response to an emergency event, the mobile device (400) including a position sensor (400) for determining the current position of the mobile device (400) and the mobile device (400) providing the current position to a fire control panel (200) of the plurality of fire control panels; and wherein the mobile device (400) further comprises a screen (475) depicting various fields, the fields including a serial number and location field (472a) displaying the fire control panels (200) within the system (100) and where they are physically located, a status field (472b) identifying whether or not the respective fire control panel (200) is online, offline, or undergoing any maintenance, a paging source field (472) identifying whether the mobile device (400) or the respective fire control panel (200) is in control of the paging capabilities, and a change source field (472d) including one or more selectable icons corresponding to executable instructions operable to change the paging source upon selection of the icon such that upon selection of the icon, control of the paging capabilities is switched from the respective fire control panel (200) to the mobile device (400) or vice versa, the mobile device (400) carrying out the steps of:
receiving (1210) a message via a fire control panel of the plurality of fire control panels, identifying an emergency event;
if the control of the paging capabilities is switched from the respective control panel to the mobile device upon selection of the one or more selectable icons, sending a reply message to the fire control panel in response to the message identifying an emergency event;
transmitting (1440) an identification of an audio file corresponding to the emergency event to the fire control panel for broadcasting of an audio signal corresponding to the identified audio file to one or more notification devices.

8. The method of claim 7,
wherein the reply message includes one or more credentials to authenticate that the mobile device (400) is authorized to assume paging capabilities from the control panel (200);
wherein the reply message includes one or more credentials to authenticate that the mobile device (400) is authorized to assume paging capabilities from the control panel (200);
the method further comprising receiving a second message, via the control panel (200), in response to the reply message, the second message authorizing the mobile device (400) to assume paging capabilities.

9. The method of claim 7, further comprising:
receiving an initial audio signal corresponding to the emergency event, via a microphone operably connected to the mobile device (400); and
generating the audio file to represent the initial audio signal;
wherein the audio file is representative of a pre-recorded audio message.

10. The method of claim 7, further comprising:
relinquishing paging capabilities to the control panel (200) upon successful broadcasting of the audio signal.

11. The method of claim 7, the fire control panel carrying out the steps of:
generating (1220), by the fire control panel (200), the message identifying the emergency event;
transmitting (1220), by the fire control panel (200), the message to the mobile device (400);
receiving (1230) the reply message from the mobile device (400) in response to the message;
determining (1240) whether the reply message includes the identification identifying the audio file corresponding to the emergency event; and
broadcasting (1242, 1250), via one or more notification devices operably connected to the fire control panel (200), the audio signal in response to determining that the reply message identifies the audio file.

12. The method of claim 11, wherein the reply message includes the audio file; and wherein the broadcasted audio signal is representative of the audio file.

13. The method of claim 12, wherein the identified audio file is representative of audio received via a microphone operably connected to the mobile device (400), or wherein the identified audio file is representative of a pre-recorded audio message.

14. The method of claim 11, wherein the step of transmitting the message to the mobile device (400) comprises:
receiving one or more credentials from the mobile device (400) and determining whether the one or more credentials identify the mobile device (400) as authorized to assume paging capabilities from the control panel prior to broadcasting the audio signal.

15. The method of claim 14 further comprising,
verifying the one or more credentials by comparing the one or more credentials with a listing of authorized users or devices, and
deactivating a microphone operably connected to the control panel upon assigning the paging capabilities to the mobile device (400).

## Patentansprüche

1. Live-Funkrufsystem, das mehrere Brandmeldezentralen (200) und eine mobile Vorrichtung (400) beinhaltet, wobei eine Brandmeldezentrale (200) der mehreren Brandmeldezentralen Funkruffähigkeiten aufweist und Folgendes umfasst:
einen Prozessor (210) in Signalkommunikation mit einem Speicher (220) und ausgelegt zum Ausführen mehrerer in dem Speicher (210) gespeicherter Anweisungen einer Meldezentralenanwendung (270) als Reaktion auf ein Notfallereignis;
wobei der Prozessor (210) bei Empfangen (1210) eines Alarms, der auf das Notfallereignis hinweist, unter der Steuerung der Meldezentralenanwendung (270) zu Folgendem ausgelegt ist:
Erzeugen (1210) einer Nachricht, die das Notfallereignis identifiziert;
Übertragen (1220) der Nachricht an die mobile Vorrichtung (400) ;
Empfangen (1230) einer Antwortnachricht über die mobile Vorrichtung (400) als Reaktion auf die Nachricht;
Bestimmen (1240), ob die Antwortnachricht eine dem Notfall entsprechende Audiodatei identifiziert; und
Rundsenden (1242, 1250), über eine oder mehrere mit der Brandmeldezentrale (200) wirkverbundene Benachrichtigungsvorrichtungen (268, 300), eines Audiosignals als Reaktion auf das Bestimmen, ob die Antwortnachricht die Audiodatei identifiziert; wobei
die mobile Vorrichtung (400) einen Positionssensor (400) zum Bestimmen der aktuellen Position der mobilen Vorrichtung (400) beinhaltet und die mobile Vorrichtung (400) der Brandmeldezentrale (200) die aktuelle Position bereitstellt; und wobei
die mobile Vorrichtung (400) ferner einen Bildschirm (475) umfasst, der verschiedene Felder darstellt, wobei die Felder ein Seriennummer-und-Standort-Feld (472a), das die Brandmeldezentralen (200) in dem System (100) und deren physische Standorte anzeigt, ein Statusfeld (472b), das identifiziert, ob die jeweilige Brandmeldezentrale (200) online, offline ist oder einer Wartung unterzogen wird oder nicht, ein Funkrufquellenfeld (472), das identifiziert, ob die mobile Vorrichtung (400) oder die jeweilige Brandmeldezentrale (200) die Steuerung über die Funkruffähigkeiten hat, und ein Quellenänderungsfeld (472d), das ein oder mehrere auswählbare Symbole beinhaltet, die ausführbaren Anweisungen entsprechen, bedienbar zum derartigen Ändern der Funkrufquelle bei Auswahl des Symbols, dass bei Auswahl des Symbols die Steuerung der Funkruffähigkeiten von der jeweiligen Brandmeldezentrale (200) zu der mobilen Vorrichtung (400) umgeschaltet wird oder umgekehrt, beinhalten,
wobei die mobile Vorrichtung ausgelegt ist zum Senden der Antwortnachricht, wenn die Steuerung der Funkruffähigkeiten bei Auswahl des einen oder der mehreren auswählbaren Symbole von der jeweiligen Meldezentrale zu der mobilen Vorrichtung umgeschaltet wird.

2. System nach Anspruch 1,
wobei die Antwortnachricht die Audiodatei beinhaltet; und wobei das rundgesendete Audiosignal die identifizierte Audiodatei repräsentiert.

3. System nach Anspruch 2,
wobei die identifizierte Audiodatei ein Audio repräsentiert, das über ein mit der mobilen Vorrichtung (400) wirkverbundenes Mikrofon (415) empfangen wird, oder
wobei die identifizierte Audiodatei eine vorab aufgenommene Audionachricht repräsentiert.

4. System nach Anspruch 1,
wobei die Brandmeldezentrale bei Übertragen der Nachricht an die mobile Vorrichtung (400) einen oder mehrere in der Antwortnachricht enthaltene Berechtigungsnachweise empfängt, und wobei der Prozessor unter der Steuerung der Steueranwendung ferner zu Folgendem ausgelegt ist:
Bestimmen, ob der eine oder die mehreren Berechtigungsnachweise die mobile Vorrichtung (400) als zum Annehmen von Funkruffähigkeiten von der Brandmeldezentrale autorisiert identifizieren, bevor die Audiosignale rundgesendet werden.

5. System nach Anspruch 4, wobei die Brandmeldezentrale ferner Folgendes umfasst:
eine Speichervorrichtung (240), die eine Auflistung (245) von Benutzern oder Vorrichtungen, die zum Annehmen von Funkruffähigkeiten von der Brandmeldezentrale autorisiert sind, beinhaltet; und
wobei der Prozessor unter der Steuerung der Meldezentralenanwendung ferner ausgelegt ist zum Verifizieren des einen oder der mehreren Berechtigungsnachweise durch Vergleichen des einen oder der mehreren Berechtigungsnachweise mit der Auflistung.

6. System nach Anspruch 1,
wobei die Brandmeldezentrale unter der Steuerung der Meldezentralenanwendung ferner zu Folgendem ausgelegt ist: Deaktivieren eines mit der Brandmeldezentrale wirkverbundenen Mikrofons bei Abgeben von Funkruffähigkeiten.

7. Verfahren in einem Live-Funkrufsystem, das mehrere Brandmeldezentralen (200) und eine mobile Vorrichtung (400) beinhaltet, zum Tätigen von Live-Funkrufen als Reaktion auf ein Notfallereignis, wobei die mobile Vorrichtung (400) einen Positionssensor (400) zum Bestimmen der aktuellen Position der mobilen Vorrichtung (400) beinhaltet und die mobile Vorrichtung (400) einer Brandmeldezentrale (200) der mehreren Brandmeldezentralen die aktuelle Position bereitstellt; und wobei
die mobile Vorrichtung (400) ferner einen Bildschirm (475) umfasst, der verschiedene Felder darstellt, wobei die Felder ein Seriennummer-und-Standort-Feld (472a), das die Brandmeldezentralen (200) in dem System (100) und deren physische Standorte anzeigt, ein Statusfeld (472b), das identifiziert, ob die jeweilige Brandmeldezentrale (200) online, offline ist oder einer Wartung unterzogen wird oder nicht, ein Funkrufquellenfeld (472), das identifiziert, ob die mobile Vorrichtung (400) oder die jeweilige Brandmeldezentrale (200) die Steuerung über die Funkruffähigkeiten hat, und ein Quellenänderungsfeld (472d), das ein oder mehrere auswählbare Symbole beinhaltet, die ausführbaren Anweisungen entsprechen, bedienbar zum derartigen Ändern der Funkrufquelle bei Auswahl des Symbols, dass bei Auswahl des Symbols die Steuerung der Funkruffähigkeiten von der jeweiligen Brandmeldezentrale (200) zu der mobilen Vorrichtung (400) umgeschaltet wird oder umgekehrt, beinhalten,
wobei die mobile Vorrichtung (400) die folgenden Schritte ausführt:
Empfangen (1210) einer Nachricht über eine Brandmeldezentrale der mehreren Brandmeldezentralen, die ein Notfallereignis identifiziert;
wenn die Steuerung der Funkruffähigkeiten bei Auswahl des einen oder der mehreren auswählbaren Symbole von der jeweiligen Meldezentrale zu der mobilen Vorrichtung umgeschaltet wird, Senden einer Antwortnachricht an die Brandmeldezentrale als Reaktion auf die Nachricht, die ein Notfallereignis identifiziert;
Übertragen (1440) einer Identifikation einer Audiodatei, die dem Notfallereignis entspricht, an die Brandmeldezentrale zum Rundsenden eines Audiosignals, das der identifizierten Audiodatei entspricht, an eine oder mehrere Benachrichtigungsvorrichtungen.

8. Verfahren nach Anspruch 7,
wobei die Antwortnachricht einen oder mehrere Berechtigungsnachweise zum Authentifizieren, dass die mobile Vorrichtung (400) zum Annehmen von Funkruffähigkeiten von der Meldezentrale (200) autorisiert ist, beinhaltet;
wobei das Verfahren ferner Folgendes umfasst:
Empfangen einer zweiten Nachricht über die Meldezentrale (200) als Reaktion auf die Antwortnachricht, wobei die zweite Nachricht die mobile Vorrichtung (400) zum Annehmen von Funkruffähigkeiten autorisiert.

9. Verfahren nach Anspruch 7, das ferner Folgendes umfasst:
Empfangen eines anfänglichen Audiosignals, das dem Notfallereignis entspricht, über ein mit der mobilen Vorrichtung (400) wirkverbundenes Mikrofon; und
Erzeugen der Audiodatei zum Repräsentieren des anfänglichen Audiosignals;
wobei die Audiodatei eine vorab aufgenommene Audionachricht repräsentiert.

10. Verfahren nach Anspruch 7, das ferner Folgendes umfasst: Abgeben von Funkruffähigkeiten an die Meldezentrale (200) bei erfolgreichem Rundsenden des Audiosignals.

11. Verfahren nach Anspruch 7, wobei die Brandmeldezentrale die folgenden Schritte ausführt:
Erzeugen (1220), durch die Brandmeldezentrale (200), der Nachricht, die das Notfallereignis identifiziert;
Übertragen (1220), durch die Brandmeldezentrale (200), der Nachricht an die mobile Vorrichtung (400);
Empfangen (1230) der Antwortnachricht von der mobilen Vorrichtung (400) als Reaktion auf die Nachricht;
Bestimmen (1240), ob die Antwortnachricht die Identifikation, die die dem Notfallereignis entsprechende Audiodatei identifiziert, beinhaltet; und
Rundsenden (1242, 1250), über eine oder mehrere mit der Brandmeldezentrale (200) wirkverbundene Benachrichtigungsvorrichtungen, des Audiosignals als Reaktion auf das Bestimmen, dass die Antwortnachricht die Audiodatei identifiziert.

12. Verfahren nach Anspruch 11, wobei die Antwortnachricht die Audiodatei beinhaltet; und wobei das rundgesendete Audiosignal die Audiodatei repräsentiert.

13. Verfahren nach Anspruch 12, wobei die identifizierte Audiodatei ein Audio repräsentiert, das über ein mit der mobilen Vorrichtung (400) wirkverbundenes Mikrofon empfangen wird, oder wobei die identifizierte Audiodatei eine vorab aufgenommene Audionachricht repräsentiert.

14. Verfahren nach Anspruch 11, wobei der Schritt des Übertragens der Nachricht an die mobile Vorrichtung (400) Folgendes umfasst:
Empfangen eines oder mehrerer Berechtigungsnachweise von der mobilen Vorrichtung (400) und Bestimmen, ob der eine oder die mehreren Berechtigungsnachweise die mobile Vorrichtung (400) als zum Annehmen von Funkruffähigkeiten von der Meldezentrale autorisiert identifizieren, bevor das Audiosignal rundgesendet wird.

15. Verfahren nach Anspruch 14, das ferner Folgendes umfasst: Verifizieren des einen oder der mehreren Berechtigungsnachweise durch Vergleichen des einen oder der mehreren Berechtigungsnachweise mit einer Auflistung autorisierter Nutzer oder Vorrichtungen, und
Deaktivieren eines mit der Meldezentrale wirkverbundenen Mikrofons bei Zuweisen der Funkruffähigkeiten zu der mobilen Vorrichtung (400).

## Revendications

1. Système de radiomessagerie en direct comprenant une pluralité de panneaux de contrôle d'incendie (200) et un dispositif mobile (400), où un panneau de contrôle d'incendie (200) de la pluralité de panneaux de contrôle d'incendie a des capacités de radiomessagerie et comprend :
un processeur (210) en communication par signaux avec une mémoire (220) et configuré pour exécuter une pluralité d'instructions d'une application de panneau de contrôle (270) stockée dans la mémoire (210) et en réponse à un événement d'urgence ;
où, à la réception (1210) d'une alerte indiquant l'événement d'urgence, le processeur (210), sous le contrôle de l'application de panneau de contrôle (270), est configuré pour :
générer (1210) un message identifiant l'événement d'urgence ;
transmettre (1220) le message au dispositif mobile (400) ;
recevoir (1230) un message de réponse, par l'intermédiaire du dispositif mobile (400), en réponse au message ;
déterminer (1240) si le message de réponse identifie un fichier audio correspondant à l'urgence ; et
diffuser (1242, 1250), par l'intermédiaire d'un ou plusieurs dispositifs de notification (268, 300) connectés de manière opérationnelle au panneau de contrôle d'incendie (200), un signal audio en réponse à la détermination du fait que le message de réponse identifie le fichier audio ; où le dispositif mobile (400) comprend un capteur de position (400) pour déterminer la position courante du dispositif mobile (400) et le dispositif mobile (400) fournissant la position courante au panneau de contrôle d'incendie (200) ; et où
le dispositif mobile (400) comprend en outre un écran (475) décrivant divers champs, les champs comprenant un champ de numéro de série et de localisation (472a) affichant les panneaux de contrôle d'incendie (200) dans le système (100) et où ils sont physiquement situés, un champ d'état (472b) identifiant si oui ou non le panneau de contrôle d'incendie respectif (200) est en ligne, hors ligne, ou subit une maintenance quelconque, un champ de source de radiomessagerie (472) identifiant si le dispositif mobile (400) ou le panneau de contrôle d'incendie respectif (200) contrôle les capacités de radiomessagerie, et un champ de source de changement (472d) incluant une ou plusieurs icônes sélectionnables correspondant à des instructions exécutables utilisables pour changer la source de radiomessagerie lors de la sélection de l'icône de manière à ce que, lors de la sélection de l'icône, le contrôle des capacités de radiomessagerie est commuté du panneau de contrôle d'incendie respectif (200) au dispositif mobile (400) ou vice versa,
où le dispositif mobile est configuré pour envoyer le message de réponse si le contrôle des capacités de radiomessagerie est commuté du panneau de contrôle respectif au dispositif mobile lors de la sélection des une ou plusieurs icônes sélectionnables.

2. Système selon la revendication 1,
dans lequel le message de réponse comprend le fichier audio ; et
dans lequel le signal audio diffusé est représentatif du fichier audio identifié.

3. Système selon la revendication 2,
dans lequel le fichier audio identifié est représentatif de l'audio reçu par l'intermédiaire d'un microphone (415) connecté de manière opérationnelle au dispositif mobile (400), ou
dans lequel le fichier audio identifié est représentatif d'un message audio préenregistré.

4. Système selon la revendication 1,
dans lequel, lors de la transmission du message au dispositif mobile (400), le panneau de contrôle d'incendie reçoit une ou plusieurs informations d'identification incluses dans le message de réponse, et où le processeur, sous le contrôle de l'application de contrôle, est en outre configuré pour :
déterminer si les une ou plusieurs informations d'identification identifient le dispositif mobile (400) comme étant autorisé à assumer des capacités de radiomessagerie à partir du panneau de contrôle d'incendie avant de diffuser les signaux audio.

5. Système selon la revendication 4, le panneau de contrôle d'incendie comprenant en outre :
un dispositif de stockage (240) qui inclut une liste (245) d'utilisateurs ou de dispositifs autorisés à assumer des capacités de radiomessagerie à partir du panneau de contrôle d'incendie ; et
où le processeur, sous le contrôle de l'application du panneau de contrôle, est en outre configuré pour vérifier les une ou plusieurs informations d'identification en comparant les une ou plusieurs informations d'identification avec la liste.

6. Système selon la revendication 1,
dans lequel le panneau de contrôle d'incendie, sous le contrôle de l'application de panneau de contrôle, est en outre configuré pour : désactiver un microphone connecté de manière opérationnelle au panneau de contrôle d'incendie lors de l'abandon des capacités de radiomessagerie.

7. Procédé dans un système de radiomessagerie en direct comprenant une pluralité de panneaux de contrôle d'incendie (200) et un dispositif mobile (400) pour la radiomessagerie en direct en réponse à un événement d'urgence,
le dispositif mobile (400) comprenant un capteur de position (400) pour déterminer la position courante du dispositif mobile (400) et le dispositif mobile (400) fournissant la position courante à un panneau de contrôle d'incendie (200) de la pluralité de panneaux de contrôle d'incendie ; et où le dispositif mobile (400) comprend en outre un écran (475) décrivant divers champs, les champs comprenant un champ de numéro de série et de localisation (472a) affichant les panneaux de contrôle d'incendie (200) dans le système (100) et où ils sont physiquement situés, un champ d'état (472b) identifiant si oui ou non le panneau de contrôle d'incendie respectif (200) est en ligne, hors ligne ou subit une maintenance quelconque, un champ de source de radiomessagerie (472) identifiant si le dispositif mobile (400) ou le panneau de contrôle d'incendie respectif (200) contrôle les capacités de radiomessagerie, et un champ de source de changement (472d) comprenant une ou plusieurs icônes sélectionnables correspondant à des instructions exécutables utilisables pour changer la source de radiomessagerie lors de la sélection de l'icône de manière à ce que, lors de la sélection de l'icône, le contrôle des capacités de radiomessagerie est commuté du panneau de contrôle d'incendie respectif (200) au dispositif mobile (400) ou vice versa,
le dispositif mobile (400) exécutant les étapes suivantes :
recevoir (1210) un message par l'intermédiaire d'un panneau de contrôle d'incendie de la pluralité de panneaux de contrôle d'incendie, identifiant un événement d'urgence ;
si le contrôle des capacités de radiomessagerie est commutée du panneau de contrôle respectif au dispositif mobile lors de la sélection d'une ou plusieurs icônes sélectionnables, envoyer un message de réponse au panneau de contrôle d'incendie en réponse au message identifiant un événement d'urgence ;
transmettre (1440) une identification d'un fichier audio correspondant à l'événement d'urgence au panneau de contrôle d'incendie pour la diffusion d'un signal audio correspondant au fichier audio identifié à un ou plusieurs dispositifs de notification.

8. Procédé selon la revendication 7,
dans lequel le message de réponse inclut un ou plusieurs justificatifs d'identité pour authentifier que le dispositif mobile (400) est autorisé à assumer des capacités de radiomessagerie à partir du panneau de contrôle (200) ;
le procédé comprenant en outre l'étape suivante :
recevoir un deuxième message par l'intermédiaire du panneau de contrôle (200), en réponse au message de réponse, le deuxième message autorisant le dispositif mobile (400) à assumer des capacités de radiomessagerie.

9. Procédé selon la revendication 7, comprenant en outre les étapes suivantes :
recevoir un signal audio initial correspondant à l'événement d'urgence, par l'intermédiaire d'un microphone connecté de manière opérationnelle au dispositif mobile (400) ; et
générer le fichier audio pour représenter le signal audio initial ;
où le fichier audio est représentatif d'un message audio préenregistré.

10. Procédé selon la revendication 7, comprenant en outre l'étape suivante :
abandonner les capacités de radiomessagerie du panneau de contrôle (200) lors de la diffusion réussie du signal audio.

11. Procédé selon la revendication 7, le panneau de contrôle d'incendie exécutant les étapes suivantes :
générer (1220), par le panneau de contrôle d'incendie (200), le message identifiant l'événement d'urgence ;
transmettre (1220), par le panneau de contrôle d'incendie (200), le message au dispositif mobile (400) ;
recevoir (1230) le message de réponse du dispositif mobile (400) en réponse au message ;
déterminer (1240) si le message de réponse comprend l'identification du fichier audio correspondant à l'événement d'urgence ; et
diffuser (1242, 1250), par l'intermédiaire d'un ou plusieurs dispositifs de notification connectés de manière opérationnelle au panneau de contrôle d'incendie (200), le signal audio en réponse à la détermination du fait que le message de réponse identifie le fichier audio.

12. Procédé selon la revendication 11, dans lequel le message de réponse comprend le fichier audio ; et dans lequel le signal audio diffusé est représentatif du fichier audio.

13. Procédé selon la revendication 12, dans lequel le fichier audio identifié est représentatif de l'audio reçu par l'intermédiaire d'un microphone connecté de manière opérationnelle au dispositif mobile (400), ou dans lequel le fichier audio identifié est représentatif d'un message audio préenregistré.

14. Procédé selon la revendication 11, dans lequel l'étape de transmission du message au dispositif mobile (400) comprend les étapes suivantes :
recevoir une ou plusieurs informations d'identification en provenance du dispositif mobile (400) et déterminer si la ou
les informations d'identification identifient le dispositif mobile (400) comme étant autorisé à assumer des capacités de radiomessagerie à partir du panneau de contrôle avant de diffuser le signal audio.

15. Procédé selon la revendication 14, comprenant en outre les étapes suivantes :
vérifier une ou plusieurs informations d'identification en comparant les une ou plusieurs informations d'identification avec une liste d'utilisateurs ou de dispositifs autorisés, et
désactiver un microphone connecté de manière opérationnelle au panneau de contrôle lors de l'attribution des capacités de radiomessagerie au dispositif mobile (400).
